# EUROPÄISCHE PATENTANMELDUNG

(11) **EP 1 649 964 A1**
(43) Veröffentlichungstag der Anmeldung: **26.04.2006**
(21) Anmeldenummer: 04025297.5
(22) Anmeldetag: 25.10.2004
(51) Int. Cl.: B23K 26/04

(54) **Vorrichtung zur Bestimmung der Lage eines Laserstrahls**

(71) Anmelder: TRUMPF Werkzeugmaschinen GmbH + Co. KG, 71254 Ditzingen (DE)
(72) Erfinder: Huissel, Frank, 74388 Talheim (DE); Fischer, Gerhard, 70499 Stuttgart (DE)
(74) Vertreter: Kohler Schmid Möbus

(57) **Zusammenfassung**

Eine Vorrichtung (6) zum Bestimmen der Lage eines Laserstrahls (1) weist mindestens ein Umlenkmittel (7, 10) auf, das im Wesentlichen in der Sollposition des Laserstrahls (1) liegt und das zumindest einen Teil des Lichtes eines Laserstrahls (1) nach außen zu einem Visualisierungsmittel zur Erzeugung eines wahrnehmbaren Lichtsignals lenkt.

## Beschreibung

Die Erfindung betrifft eine Vorrichtung zur Bestimmung der Lage eines Laserstrahls.

In einer Laserbearbeitungsmaschine ist die genaue Position der Strahlachse eine notwendige Voraussetzung, um an der Bearbeitungsstelle die maximale Laserleistung und eine Intensitätsverteilung hoher Qualität zu erhalten. Lage, Form und Größe des Fokus verändern sich bei einer Abweichung von der Sollposition des Laserstrahls. Die Justage und somit die auch die Bestimmung der Position des Laserstrahls muss mit einer Genauigkeit von 0,1 bis 1 mm erfolgen, um ein optimales Bearbeitungsergebnis zu erreichen.

An Laserbearbeitungsmaschinen müssen daher vor der Inbetriebnahme die optischen Elemente der Strahlführung so justiert werden, dass der Laserstrahl am Ende des Strahlenganges in eine vordefinierte Position trifft.

Dies wird derzeit mithilfe eines Fadenkreuzes, das am Ende des Strahlengangs zur Einstellung an einer definierten Stelle befestigt wird durchgeführt. Der Laserstrahl wird mithilfe eines sichtbaren Richtlasers justiert, und das Ergebnis der Justage wird dann an dem Fadenkreuz kontrolliert und gegebenenfalls mehrere Male korrigiert. Dies ist mit einem ständigen Wechsel der Position des Einstellers zur Justage und Kontrolle verbunden.

Eine weitere Möglichkeit ist die Erfassung der Intensitätsverteilung des Laserstrahls um eine Sollposition mittels Nadeln, deren Erwärmung mithilfe von Temperaturfühlern ermittelt wird und somit die Lage des Laserstrahls bestimmt werden kann. Mit dieser Vorrichtung kann aber auf Grund der großen Wärmekapazität der Nadeln nur sehr langsam gearbeitet werden, und bei einer Durchmesseränderung des Laserstrahls müssen die Nadeln neu justiert werden.

Es ist auch eine Vorrichtung aus der DE 3812091 bekannt, bei dem mithilfe einer aufwändigen Vorrichtung ein temperaturabhängiger Sensor durch den Laserstrahl bewegt und eine Vielzahl von Messwerten der Intensität innerhalb des Laserstrahls aufgenommen wird. Diese werden dann zur Ermittlung der Strahlfläche und des Strahlrandes in vielen automatisierten Rechenoperationen herangezogen. Aus der Strahlfläche und dem Strahlrand kann dann die Lage des Strahlzentrums bzw. die Lage des Laserstrahls ermittelt werden.

Der Erfindung liegt die Aufgabe zugrunde, eine Vorrichtung zu schaffen, die möglichst einfach die Position des Laserstrahls in einer ausreichenden Genauigkeit für den Einsteller über eine größere Entfernung anzeigt.

Diese Aufgabe wird durch die Vorrichtung gemäß Patentanspruch 1 gelöst. Es wird ein Mittel zur Umlenkung zumindest von Teilen des Laserstrahls (Pilotlaser oder Richtlaser mit einer Wellenlänge im sichtbarem Bereich) in den Strahlengang eingebracht. Dieses Umlenkmittel ist in der Sollposition des Laserstrahls angebracht. Die Vorrichtung ist so justiert, dass sich die Sollposition im Mittelpunkt der Trägerplatte für die Umlenkmittel befindet. Die Einstellung der optimalen Position des Laserstrahls lässt sich an der maximalen Intensität des erzeugten Signals des Mittels zur Erzeugung eines wahrnehmbaren Signals erkennen. Dies kann ein optisches Signal eines Visualisierungsmittels oder ein akustisches Signal (Piepton) sein. Unter einem Visualisierungsmittel wird verstanden, dass das umgelenkte Laserlicht für den Anwender sichtbar austritt, beispielsweise am Ende eines Glasfaserkabels, durch Umlenkung an einem optischen Element, durch einen Sensor oder dergleichen.

Eine weitere Ausführungsform besitzt mehrere Umlenkmittel in gleichen Abständen von der Sollposition des Laserstrahls im Wesentlichen in der Sollposition des Laserstrahls. Lichtanteile des Laserstrahls, die auf die Umlenkmittel treffen, werden davon radial zum Zentrum nach außen geleitet und sichtbar gemacht. Es sind mindestens drei Umlenkmittel erforderlich, um die Lage des Laserstrahls zu ermitteln, vier oder mehr Umlenkmitteln in einem Abstand von der Sollposition erleichtern die Einstellung. Ist beispielsweise die Einstellung des Richtlasers so, dass er oberhalb der Sollposition auf die Vorrichtung auftrifft, ist die Intensität des Lichtes, das durch die Umlenkeinheiten oberhalb des Mittelpunktes der Vorrichtung nach außen geleitetet wird, größer als die Intensität des Lichtes, das durch die Umlenkeinheiten unterhalb des Mittelpunktes nach außen geleitet wird. Dies kann durch den größeren Abstand der nach außen auf die Visualisierungsmittel geleiteten Lichtpunkte von der Sollposition auch von größerer Entfernung erkannt werden. Analog kann sich bei einem akustischen Signal die Frequenz ändern und erhöhen bis zu einem Dauerton, der die beste Einstellung widerspiegelt.

Eine weitere Ausführungsform ist, dass sich zusätzlich genau im Zentrum der Vorrichtung ein Umlenkmittel befindet, das die Lichtanteile genau im Zentrum der Vorrichtung und somit der Sollposition an eine Stelle nach außen leitet, an der angezeigt wird, dass im Zentrum der Sollposition Lichtanteile auftreffen.

Die optimale Einstellung des Richtlasers wird dann durch ein Maximum der Intensität des Lichtes, das durch die zentrale Umlenkeinheit nach außen geleitet wird, und einer gleichmäßigen Intensität an den Umlenkeinheiten im Abstand vom Mittelpunkt angezeigt.

Die Unterscheidbarkeit der einzelnen Lichtpunkte kann verbessert werden, wenn für die Anzeige der mit einem Abstand zum Zentrum positionierten Umlenkeinheiten eine andere Form, beispielsweise ein radial vom Mittelpunkt aus nach außen gerichteter Pfeil, als bei der zentrischen Umlenkeinheit, bei der beispielsweise ein Kreis verwendet werden kann. Eine andere Möglichkeit der Unterscheidung ist die Veränderung der Farbe durch den Einsatz von Farbfiltern, die wiederum für die zentrische Umlenkeinheit eine andere Farbe wiedergeben als für die, die mit einem Abstand vom Zentrum angeordnet sind. Eine weitere Verbesserung ist eine größere Vergrößerung der Fläche der Visualisierungsmittel zur besseren Erkennbarkeit.

Die Abweichung oder der Abstand des Laserstrahls vom Zentrum kann auf unterschiedlichste Weise angezeigt werden. Dies kann insbesondere eine elektronische Anzeige sein.

Der Detektor zur Erfassung der Abweichung und die Mittel zur Visualisierung der Abweichung können räumlich voneinander getrennt sein, um dem Benutzer die Justage zu erleichtern. Beispielsweise können die Mittel zur Visualisierung in der Nähe der Bedieneinrichtung für die Justierung angeordnet sein.

Die Erfindung wird anhand eines in der schematischen Zeichnung dargestellten bevorzugten Ausführungsbeispiels erläutert. Es zeigt im Einzelnen:
- **Fig. 1**: eine Anordnung zur Justierung eines Laserstrahls;
- **Fig. 2**: eine perspektivische Ansicht der Vorrichtung zur Lagebestimmung des Laserstrahls;
- **Fig. 3**: eine Seitenansicht der Vorrichtung zur Lagebestimmung des Laserstrahls (einschließlich der verdecken Körperkanten);
- **Fig. 4**: die vordere Ansicht der Vorrichtung zur Lagebestimmung des Laserstrahls (einschließlich der verdecken Körperkanten);
- **Fig. 5**: perspektivische Ansicht der Rückseite einer Trägerplatte der Vorrichtung zur Lagebestimmung des Laserstrahls.

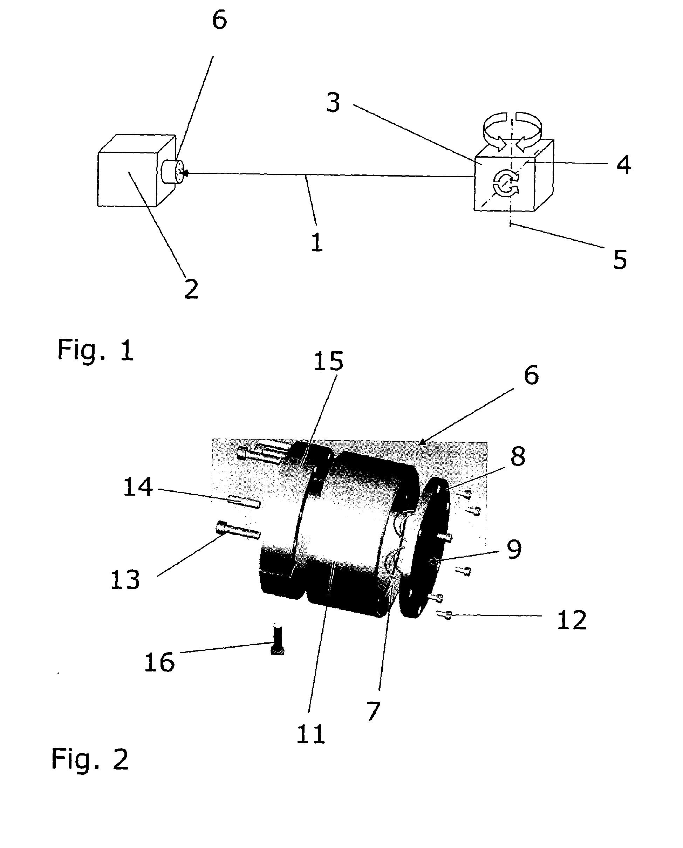

Aus **Fig. 1** ist ersichtlich, dass ein Laserstrahl **1** zwischen zwei optischen Elementen **2** und **3** justiert werden muss. Der Laserstrahl 1 soll mithilfe von Einstellmöglichkeiten an dem optischen Element 3 (Drehachse **4** und **5)** justiert werden, damit der Laserstrahl 1 in das Zentrum des optischen Elements 2 trifft. Als Zentrierhilfe ist an dem optischen Element 2 eine Vorrichtung **6** zur Lagebestimmung des auftreffenden Laserstrahls 1 lösbar angebracht.

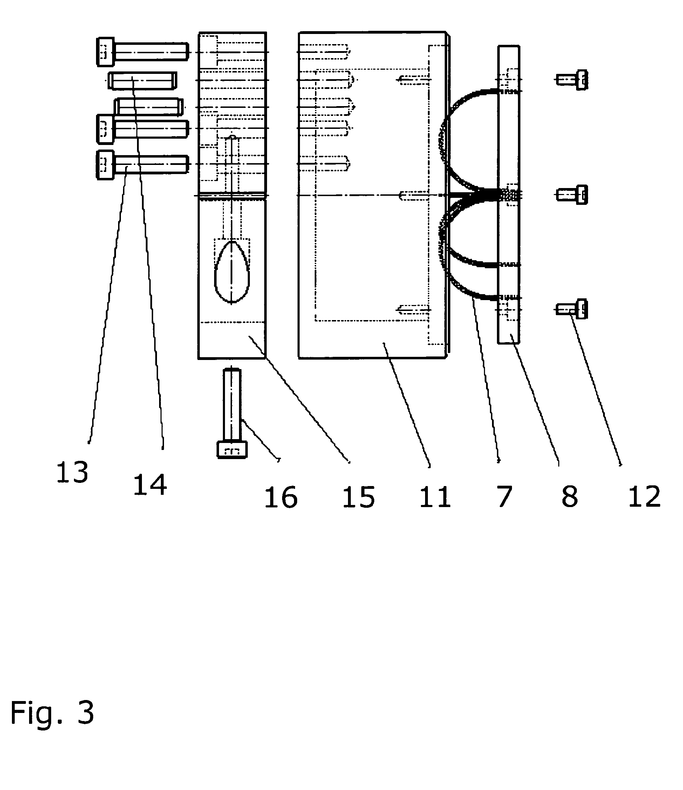

Gemäß **Fig. 2** und Fig. **3** weist die Vorrichtung 6 zur Lagebestimmung des Laserstrahls 1 radial angeordnete Lichtleiter **7** auf. Die inneren Enden der vier Lichtleiter 7 sind in einer regelmäßigen Teilung auf einem Kreis angeordnet, der konzentrisch zum Zentrum einer kreisrunden Trägerplatte **8** liegt. Die äußeren Enden der Lichtleiter 7 als Visualisierungsmittel (Streufläche für den Laserstrahl) sind auf einem wiederum konzentrischen Kreis mit einem größeren Durchmesser befestigt. Die Enden der Lichtleiter 7 sind in Durchgangsbohrungen der Trägerplatte 8 so befestigt, dass sie durch die Trägerplatte 8 gesteckt werden und an der Fläche **9** bündig abschließen.

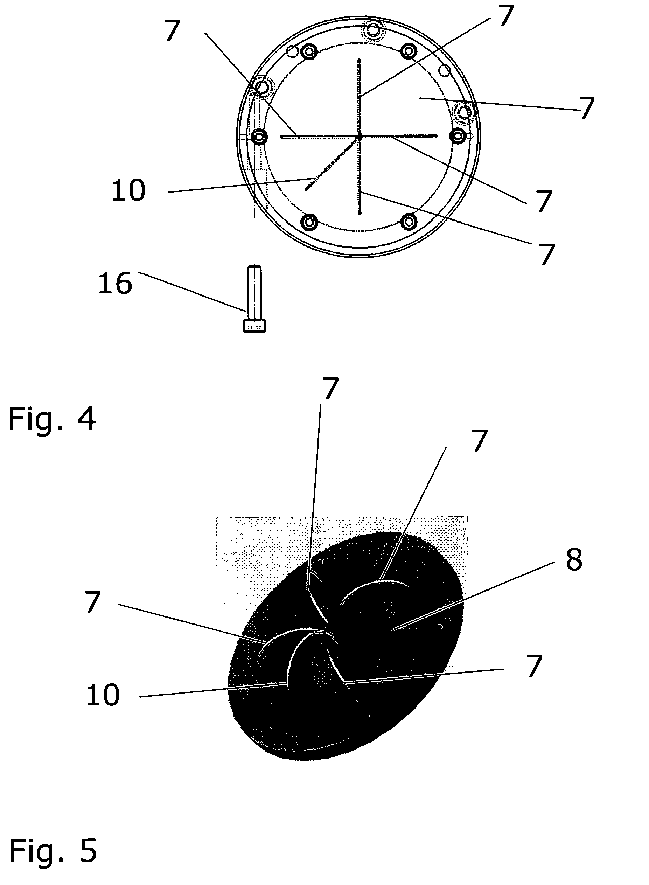

Im Mittelpunkt der Trägerplatte 8 ist das eine Ende eines Lichtleiters **10** (siehe Fig. 4 und 5) positioniert, dessen äußeres Ende an einer Position auf der Trägerplatte 8 endet, die außerhalb des durch die äußeren Enden der Lichtleiter 1 aufgespannten Kreuzes liegt. Die Enden dieses Lichtleiters 10 sind ebenfalls durch Durchgangsbohrungen durch die Platte gesteckt und darin bündig mit der Fläche 9 befestigt.

Die Trägerplatte 8 ist formschlüssig in einer zylindrischen Vertiefung, die konzentrisch zu einem zylinderförmigen Gehäuse **11** an dessen einer Stirnfläche mithilfe von Schrauben **12** befestigt ist. Die Tiefe der Senkung ist so gewählt, dass eine sichere Zentrierung gewährleistet ist. Das Gehäuse 11 besitzt auf der Seite der ersten Senkung eine weitere tiefere Senkung von geringerem Durchmesser. Der Durchmesser und die Tiefe sind so gewählt, dass sie den benötigten Einbauraum für die Lichtleiter 1 und 10 gewährleisten.

Das Gehäuse 11 ist mit Schrauben **13** und mindestens zwei Zylinderstiften **14** mit einem Befestigungsring **15** verbunden. Der Befestigungsring 15 besitzt einen äußeren Durchmesser, der in etwa dem äußeren Durchmesser des Gehäuses 11 entspricht, und einen inneren Durchmesser, der dem Durchmesser eines Befestigungsflansches am Ende des Strahlenganges angepasst ist. Der Befestigungsring 15 ist an einer Stelle mit einer definierten Spaltbreite radial komplett unterbrochen und besitzt an dieser Stelle an der einen Seite tangential eine Bohrung mit einer Zylindersenkung und an der anderen Seite tangential ein Gewinde mit einem entsprechenden Gewindedurchmesser. An der gegenüberliegenden Seite ist der Querschnitt des Ringes 15 nur teilweise unterbrochen, und das Material ist am äußeren Durchmesser mit einer Wandstärke, die in etwa der Hälfte der Querschnittsfläche entspricht, durchgängig vorhanden.

Zur Montage kann der Ring 15 auf Grund der Unterbrechungen etwas aufgeweitet werden und dann mithilfe einer Schraube **16** auf den Befestigungsflansch am Ende des Strahlenganges geklemmt werden. Die Befestigung des Gehäuses 11 mithilfe der Schrauben und Zylinderstifte an dem Ringabschnitt auf der gleichen Seite der Spalte gewährleistet die möglichst genaue zentrische Montage der Vorrichtung zur Lagebestimmung des Laserstrahls.

Ist der Laserstrahl 1 optimal justiert, nimmt der Lichtleiter 10 die meiste Strahlung auf und dessen äußeres Ende leuchtet am intensivsten. Ist der Laserstrahl 1 nicht justiert, nimmt einer der Lichtleiter 7 die meiste Strahlung auf und dessen äußeres Ende leuchtet am intensivsten. Aus der Ansicht der Vorderseite der Trägerplatte 8 gemäß **Fig. 4** kann der Anwender die Justage leicht kontrollieren und durchführen.

Die Anordnung der Lichtleiter 7 und 10 an der Rückseite der Trägerplatte 8 kann der **Fig. 5** entnommen werden.

## Patentansprüche

1. Vorrichtung (6) zum Bestimmen der Lage eines Laserstrahls (1), **gekennzeichnet durch** mindestens ein Umlenkmittel (7, 10), das im Wesentlichen in der Sollposition des Laserstrahls (1) liegt und das zumindest einen Teil des Lichtes eines Laserstrahls (1) vorzugsweise nach außen zu einem Mittel zur Erzeugung eines wahrnehmbaren Signals lenkt.

2. Vorrichtung nach Anspruch 1, **dadurch gekennzeichnet, dass** das Mittel ein Visualisierungsmittel zur Erzeugung eines optischen Signals ist.

3. Vorrichtung nach Anspruch 1, **dadurch gekennzeichnet, dass** das Mittel ein Mittel zur Erzeugung eines akustischen Signals ist.

4. Vorrichtung nach einem der vorhergehenden Ansprüche, **dadurch gekennzeichnet, dass** mehrere Umlenkmittel (7) in gleichen Abständen zur Sollposition zumindest Teile des Laserstrahls (1) zu einem Mittel zur Erzeugung eines wahrnehmbaren Signals lenken.

5. Vorrichtung nach einem der vorhergehenden Ansprüche, **dadurch gekennzeichnet, dass** ein Umlenkmittel (10) im Zentrum der Sollposition zumindest einen Teil des Laserstrahls (1) zu einem Mittel zur Erzeugung eines wahrnehmbaren Signals lenken.

6. Vorrichtung nach einem der vorhergehenden Ansprüche, **dadurch gekennzeichnet, dass** die Umlenkmittel und die Visualisierungsmittel durch Lichtleiter (7, 10) oder Glasfaserkabel ausgebildet sind.

7. Vorrichtung nach einem der vorhergehenden Ansprüche, **dadurch gekennzeichnet, dass** das Licht mittels reflektierender Flächen zum Mittel zur Erzeugung eines wahrnehmbaren Signals gelenkt wird.

8. Vorrichtung nach einem der vorhergehenden Ansprüche, **dadurch gekennzeichnet, dass** die Abweichung elektronisch angezeigt wird

9. Vorrichtung nach einem der vorhergehenden Ansprüche, **dadurch gekennzeichnet, dass** Detektor und Visualisierung räumlich voneinander getrennt sind.
